# EUROPEAN PATENT APPLICATION

(11) **EP 4 372 632 A1**
(43) Date of publication of application: **22.05.2024**
(21) Application number: 22208116.8
(22) Date of filing: 17.11.2022
(51) Int. Cl.: G06Q 10/00, G06Q 10/06, G06Q 10/08, G06Q 50/26

(54) **METHOD AND DEVICE FOR MEASURING THE QUALITY OF SEPARATED WASTE**

(71) Applicant: Cortexia SA, 1618 Châtel-St-Denis (CH)
(72) Inventor: Dupont, Julien, 1618 Châtel-Saint-Denis (CH); Treyvaud, Pauline Madeline, 1804 Corsier-sur-Vevey (CH); Bréton, Emmanuel, 1616 Attalens (CH); von Kaenel, Andréas, 1302 Vufflens-la-Ville (CH)
(74) Representative: Grosfillier, Philippe

(57) **Abstract**

The invention concerns a method for analysing and qualifying collected waste in a waste management chain, wherein said method comprises at least the following steps:
-) defining at least one waste transfer event in the waste management chain where a waste flux is optically accessible;
-) defining the measurement of at least one type of impurity in said waste flux;
-) measuring said at least one type of impurity during said waste transfer event in the waste flux;
-) attributing a quality index value to the collected waste depending on the result of the measurement step.

## Description

### TECHNICAL FIELD

The present invention concerns the field of waste collection. More specifically, the present invention concerns the field of analyzing collected waste, for example bio-waste but not limited to such waste, in order to improve the recycling process and the reuse of said waste which is considered a resource and having a certain market value in circular economy.

### BACKGROUND ART

While collecting waste has been done for years, there has been a necessity to improve the collecting process in such a way that the collected waste can be recycled in a circular economy. One of the logical ways to proceed is to separate the waste at the collection stage: for example, when using waste trucks to collect the waste, specific collection days are dedicated to the collection of certain waste. On one predetermined day, only paper is collected, then on another predetermined day, only general waste is collected, then on a further day, only bio-waste is collected etc. This means that the waste trucks only transport one type of waste at the same time and, normally, this waste is free from impurities or of other different types of waste. However, this is an idealistic vision and in fact, the collected waste is often polluted so that the recycling is not straightforward.

In addition, non-recycled bio-waste in Europe tantamount to 16 TWh biogas and 23 million m3 of compost. But while recycling of other materials has increased in recent years, this has not happened with bio-waste. As mentioned above, a major problem is that bio-waste is polluted by impurities, such as plastic, which is shredded in the plant and is extremely difficult to eliminate. At least 1,5 million tons of plastic are spread in the agriculture fields each year. Understandably, farmers are reluctant to use this compost.

The right approach should be to avoid impurities to enter a recycling plant or a valorisation plant (for example in case of biogene waste which is composted and therefor directly used a resource). The stakeholders (waste producers, municipalities, logistics and plants) have not yet been able to achieve this because of split responsibilities, lack of data and administrative overload. In addition, there is no means yet to automate this process.

Accordingly, the collected waste (be it bio-waste or other waste), when "polluted" does not have the same value as a "pure" or "clean" waste and additional treatment steps must be carried out to "clean" the collected waste to remove impurities if one wants to re-use/re-cycle it.

Waste quality assessments are made today manually, preventing a process automation. For the purpose of national yearly statistics, samplings of waste trucks are unloaded and impurities are counted by auditors. Some plants reject truck deliveries by a visual inspection, subject to discussions due to its lack of objectivity. For non-bio-waste flows, impurities may be sorted out in the processing plants, either manually or automatically (Tomra, Pellenc, Grey Parrot, Recycleye).

Digital solutions to manage waste already exist in the US (Rubicon and Compology), but they are quite low tech and their business models are not transposable to Europe. Waste management solutions (Simpliciti, C-Trace, Koco), including weight measurement and RFID tracing, confirm the real potential to increase efficiency and save costs (10-20%), but do not address quality.

Finally, there is currently no management or optimisation tools that address the (bio)waste flows systematically in order to be able to increase recycling rates.

### SUMMARY OF THE INVENTION

It is therefore an aim of the present invention to improve the known methods of treatment of collected waste such as bio-waste and other types of waste.

A further aim of the present invention is to improve the quality and quantity of the waste collected for its re-use. Also a feedback on waste quality should sensitize the polluter and motivate him to separate more.

Another aim of the present invention is to provide methods and systems that allow an assessment of the collected waste and a determination of its quality or "purity".

A further aim of the present invention is to provide methods and systems that do not impact of the waste management chain and avoid bottlenecks.

Other aims and achievements of the present invention will follow from the detailed description hereunder and from the described embodiments of the present invention.

According to the present invention, to incentivize all stakeholders to improve their bio-waste or other waste, in some embodiments, the present invention proposes to monitor the waste quality either at the truck and/or at plant delivery and to set a pricing model accordingly, whereby a quality index is defined to reflect the cleaning effort and thus the price. To reduce impurities, the sorting quality is preferably monitored at the source (for example at collection) and the invention provides data-based tools to improve the sorting from waste producers. The (bio-)waste process is enhanced with:
a) a monitoring of impurities at truck loading and/or unloading and pricing according to waste purity at truck or garbage bin/container level;
b) a dispatching of trucks to compost, sorting or incineration by monitoring quality during bio-waste collection, or other equivalent actions for other type of waste;
c) a provision of data and predictive tools to increase sorting quality at the source.

The processes and principles according to the present invention are not limited to bio-waste but are applicable to other types of waste such as paper, plastic materials, biowaste, mineral waste, composites, glass, textiles, metals (of any type), electric and electronic devices, batteries, PET, wood etc...

In embodiments, the solution is aimed preferably at municipalities and waste management professionals and allows to manage the whole process without manual interaction. It provides also predictive tools to act on sorting quality improvement. The solution is powered by unique Al computer vision for waste, predictive data sciences for optimisation, and field proven HW and SW for real-time data management.

In embodiments, the invention concerns a method for measuring and qualifying waste during waste transfer events along the waste management chain. The method may comprise for example the following successive steps:
- ) planning of the measurement of at least one type of impurity (for example according to at least one regulating sorting criteria) in at least one waste flux;
- ) planning of the measurement on mass transfer points occurring naturally between container vessels or storage spaces during the waste collection and treatment processes in a non-intrusive way neither impacting the said processes nor the nature or distribution of the waste;
- ) gaining non-intrusive optical access and informative insight into the waste content by taking advantage of the high surface to volume ratio presented by the continuous flow or batch of waste being transferred, revealing a higher share of the said waste content;
- ) accessing optically a statistically representative sampling of the waste content, said sampling occurring naturally through the mass transfer process to assess the accuracy of the measurement.

In the frame of the present invention, the notion of impurity means objects or products not complying with one regulated sorting criteria. For example, a mix of materials which are not recycled together and/or which has an impact on the quality of the material to be recycled (paper with synthetic polymers or metals, synthetic polymers (plastic) or aluminium (metals) in compost etc.).

In embodiments, the measurements may be performed on the mass transfer event occurring when waste is charged in a waste collection truck or discharged from the said truck and/or after that, including scene of the static mass before falling from the truck, while falling from the truck, spread in a recipient after falling and/or on conveyor belts.

In embodiments, the contamination level for at least one impurity in the waste may be monitored using at least one metric.

In embodiments, the monitored impurity(ies) is(are) identified and classified according to the characteristic thereof such as category, danger, typology or statistical deviation from known accepted waste, such as Biogene/fermentable/compostable vs synthetic non-fermentable/compostable. Dangerous waste is for example gas bottles, typology is for example hard v. soft materials, outlier/anomalous is for example something that lies outside the statistical distribution.

In embodiments, the method determines a quality index which is proposed as a quantitative measure of the quality of waste separation and of the valorisation potential for the separated waste towards the treatment process, the value of waste being affected by the effort to recycle said waste, i.e. clean and well separated waste has a bigger valorisation potential in an economical sense.

An example of quality index may be a scale from 1 to 4 where:
1) clean enough such that it does not necessitate any cleaning to meet regulation limits;
2) average, standard cleaning with standard equipment;
3) necessitate advanced equipment or heavy human resources (cleaning robots, people);
4) not acceptable must be burned / stored.

In embodiments, the contamination level and a weighing parameter corresponding to the type of impurity are aggregated into the said quality index using a mathematical formula following the methodology proposed, for example by taking the type, size, quantity and statistical distribution of impurities as parameters.

In embodiments, a traceability of a collected waste batch is ensured by the integration of external data during the collection process, for example localisation of the waste collected via GPS data.

In embodiments, feedbacks and reports with traced information on the contamination level, the classification and the purity index are issued and addressed to the polluter, the producer, the collecting agent, the treatment facility, the legislator or other stakeholders of the waste management.

In embodiments, the tracing and issuing of feedbacks and reports as described above for a batch of separated waste is used to improve the share and purity of separated waste.

In embodiments, the treatment of waste is facilitated by the information on the type and location of impurities within a batch of separated waste.

In embodiments, the quantification and the classification of impurities respectively as described above support the production to design products to reduce the amount of waste, improve the quality of the separation of waste form impurities and facilitate recycling, while supporting a circular economy.

In embodiments, the degree of automatization and digitalisation preferably do not require additional human resources for the operational process of waste management, including collection and treatment.

In embodiments, a predictive forecast of the quality of separated waste which is collected or will be collected is computed according to all data available.

In embodiments, the predictive waste quality forecast is used to compute and/or determine a predictive route for waste collection, said route being optimised for example to reduce travel distance and time, or to group waste by purity range in separate collection trucks.

In embodiments, a predictive forecast of the effort and quality expected towards waste treatment is computed based on the quality index of incoming batches. The quality index gives a measure of the cleaning effort to meet regulations. An aluminium can, a plastic bag and glass splitters in biogene waste are weighed according to the type, size, quantity, and statistical distribution to build the quality index. The predictive forecast makes use of the historical raw detection data, quality index and plant working effort to build a predictive model on the cleaning effort. The predictive forecast can even be uses to elaborate and/or reinforce the formulation of the quality index.

In embodiments, the invention concerns a device for measuring at least one impurity in a waste flux, using the method defined herein, and comprising at least one mobile and/or fixed camera connected to a central unit for image processing; said central unit featuring an accessible interface to send and retrieve data and signals used for automatically actuated control, monitoring and reporting.

In embodiments, the camera(s) is/are combined with at least one light source illuminating the scene covered by the field of view of the camera.

In embodiments, the device and its implementation and exploitation are non-intrusive and they require no additional operational effort or time during the collection and treatment of waste.

In embodiments, the identification and quantification of impurities are performed using anomaly detection algorithms and/or object detection algorithms and/or image segmentation algorithms (such as Anomalib, Yolo, SegFormer, or any logical combination of said algorithms.

In embodiments, the result of the detection allows for an automatically controlled actuation of a container lift to reject a container load based on a threshold criterion for impurities, for example if certain impurities are detected a the beginning of the unloading or if the field of view of the camera covers the container as well and allows to detect in an anticipated manner the presence of certain impurities.

In embodiments, the results of the detection such as the type of impurity and its location within the field of view of the camera allows for an automatically controlled actuation of an active separation facility or support a manual separation task or in other environments

In embodiments, the possible locations for measurements include mounting the camera on a waste collection truck with an insight on the antechamber where waste is poured and spreads and/or facing the collection truck when unloading the main chamber such that is has a view on the load waste when pulled out from the truck, or with a field of view on conveyor belts or open containers or spaces for storage after the waste has been discharged.

In embodiments, multiple cameras may be used, or a robotic arm to move the camera, optical or digital zoom capabilities may also be used to allow getting different perspectives, locally higher resolutions, and depth information to improve the detection, identification and qualification of impurities and sorted waste.

In embodiments of the invention, the measurement of the waste and its impurities is made in the flux of waste when said waste is charged in a truck (incoming waste) or when said waste is discharged (outgoing waste) from the truck. This allows to avoid an impact on the flux of waste: for example it is not necessary to discharge the waste in a buffer zone where the images would be taken which would slow the flux. The taking of images is preferably synchronized with the waste flux to avoid any delay.

In embodiments, images are taken of successive waste flux, for example when the content of several waste containers are successively emptied in the truck.

This also allows a volumetric measurement of the waste being charged in a truck (incoming waste), respectively discharged from the truck (outgoing waste). The result of the measurements (waste and its volume) may be used then to anticipate or prepare the treatment of the collected waste after discharge from the truck. This allows to monitor in real time the waste being collected in the trucks or discharged from the trucks and make decisions on the routing of the trucks. A statistical analysis may also be carried out to determine which type of waste comes and from where during collection. This is useful to track the impurities and their origin.

In embodiments, the camera used are 2D CCD/CMOS RGB cameras. Such cameras are quick and allow also to take sequences of images and reconstruct 3D images therefrom. They are also compact and take less space when mounted in a truck so that they may be used on many of the trucks which are used nowadays for waste collection (for example for a retrofit), without limiting the size of the containers that may be discharged in the truck. The use of a small camera also has the advantage that several cameras could be installed in a reduced space in order to gain several points of view of the waste flux thus improving the images and resulting analysis of said images, and by way of consequence the overall process. The use of a plurality of cameras, for example two, is also useful if two waste containers are discharged in parallel at the same time in the truck: at least one camera is used for each flux of incoming waste.

In embodiments, the invention concerns a method for analysing and qualifying collected waste in a waste management chain, wherein said method comprises at least the following steps:
- ) defining at least one waste transfer event in the waste management chain where a waste flux is accessible, for example optically;
- ) defining the measurement of at least one type of impurity in said waste flux;
- ) measuring said at least one type of impurity during said waste transfer event in the waste flux;
- ) attributing a quality index value to the collected waste depending on the result of the measurement step.

In embodiments, the transfer event is when the waste is discharged into a waste collection truck.

In embodiments, the transfer event is when waste is discharged from a waste collection truck and/or while filling up a dump container at a municipal waste collection center.

In embodiments, the measurement is an optical one.

In embodiments, the measurement is made by at least a camera on said truck and/or at a waste collection plant.

In embodiments, the measurement is made in the truck, when the waste is collected and/or when the waste is discharged from the truck and/or while filling up a dump container at a municipal waste collection center.

In embodiments, the contamination level for at least one impurity is monitored using at least one metric.

In embodiments, predictive forecast of the quality of separated waste collected is computed according to all data collected, such as images, quality index, localization.

In embodiments, the predictive forecast is used to compute a predictive route for waste collection, said route being optimised to reduce travel distance and time, or to group waste by purity range in separate collection trucks.

In embodiments, a predictive forecast of the effort and quality expected towards waste treatment is computed based on the quality data of incoming batches.

In embodiments, the identification and quantification of impurities are performed using anomaly detection or object detection or image segmentation algorithms or a combination of said algorithms.

In embodiments, the invention concerns a system to carry out the method as defined herein, wherein said system comprises at least one mobile or fixed camera, data transmission means to transmit data and signals, a central unit with a computer device to collect and treat said data and send commands.

In embodiments, the system comprises at least one light source to illuminate the field of view of the camera(s).

In embodiments, the camera is mounted on a waste collection truck with a field of view on an antechamber of said truck where waste is poured or said camera is facing the collection truck with field of view on the load when discharged out, or with a field of view on convertor belts or open containers or spaces for storage.

In embodiments, the system comprises at least an arm with a camera or multiple cameras, filed cameras, lasers and sensors in order to move the camera to get different perspectives, locally higher resolutions, and depth information to improve the detection, identification and qualification of impurities and sorted waste.

### BRIEF DESCRIPTION OF THE DRAWINGS

Figure 1 illustrates an embodiment of a method according to the present invention.
Figure 2 illustrates an embodiment of a system according to the present invention.
Figure 3 illustrates an embodiment of a system according to the present invention.
Figure 4 illustrates another embodiment of a system according to the present invention.

### DETAILED DESCRIPTION

According to porinciples and embodiments of the present invention a camera, for example a RGB camera, is used to take a sequence of quick images in a waste flux during the unloading of said waste in order to detect the presence of impurities in the flux and make a volumetric measurement of the waste being discharged. The volume is for example a not a topographic 3D image but a 3D volumetric map or an illustration of the percentage of impurities.

The fact that the images are taken on the flux of waste also allows a better detection of the impurities compared to a static situation where the impurities may be hidden in the waste volume.

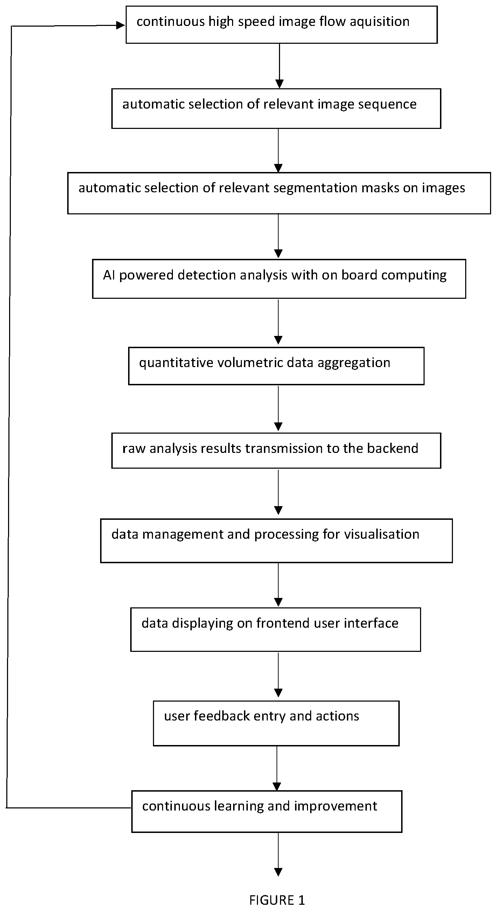

The principle of the method of the invention according to an embodiment is illustrated in figure 1. The method therefor comprises the following steps:
> A continuous high speed image flow acquisition of the waste flow
> An automatic selection of relevant image sequence
> An automatic selection of relevant areas containing waste on images
> An Al (artificial intelligence) powered detection analysis with on board computing
> A quantitative volumetric data aggregation
> A raw analysis results transmission to the backend
> A data management and processing for visualisation
> A data displaying on a front-end user interface
> A user feedback entry and actions
> A continuous learning and improvement to a carry out quicker and more efficient method and processes.

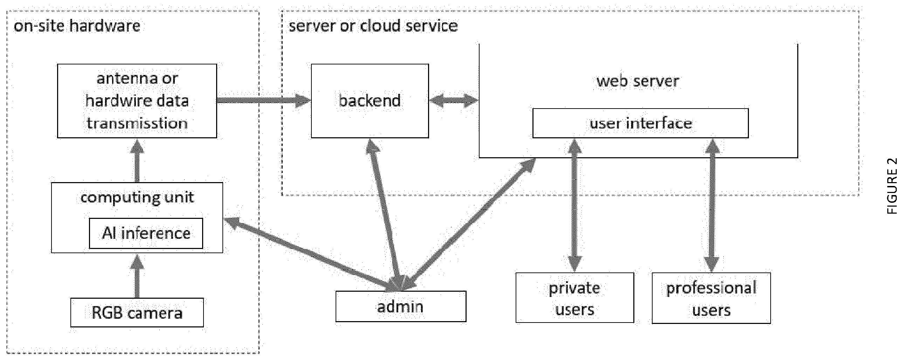

Figure 2 illustrates an embodiment of the principle of the system according to the present invention.

The system firstly comprises an on-site hardware part module comprises optical means such as a RGB camera, a computing unit (such as a computer) on which an Al application is loaded to compute the data received from the camera. The hardware module also comprises data transmission means, wireless or not such as antenna and/or hardwires.

This module communicates via a backend with a server or cloud service where the data and result of the Al calculations are transmitted to a server (for example a web server) so that the data and results are available at a user interface. The users may be private users of professional users. Finally, there is an administrative module that is used for configuration of the system, profile creation etc.

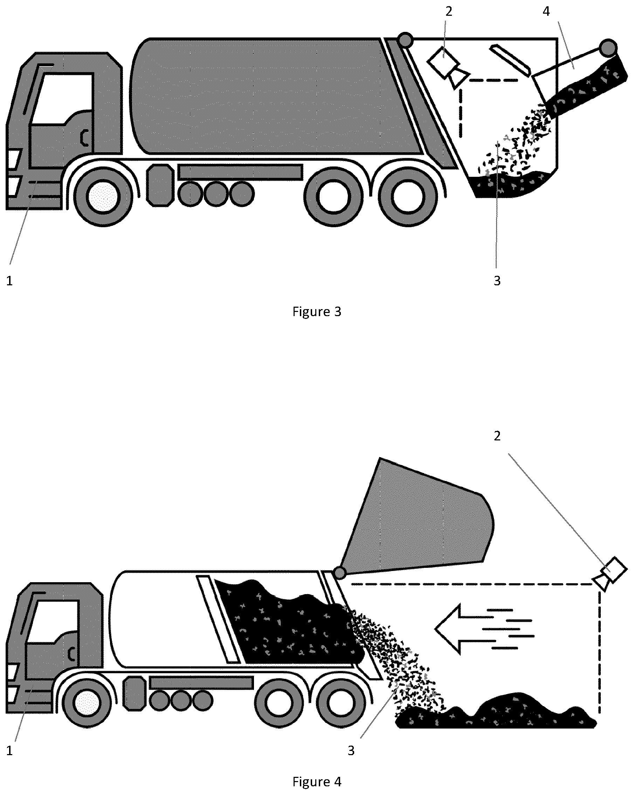

Figure 3 illustrates an embodiment of the invention used for a waste flux 3 being discharged in a truck 1. The camera 2 is fixed on the truck 1 and captures images of the waste flux 3 discharged in the truck 1 at the back thereof from a container 4.

Figure 4 illustrates another embodiment where the waste flux 3 is captured by the camera 2 when being discharged from the truck 1. Preferably, the truck 1 is moving forward as illustrated by the arrow. In other configurations, it may not be necessary that the truck moves when discharging waste.

Of course, these are only examples and other configuration may be considered, for example if the container 4 is emptied at another place of the truck 1 and/or the truck empties its waste in another way or not from its rear end.

Exemplary embodiments have been described to provide an overall understanding of the principles of the structure, function, manufacture, and use of the systems and methods disclosed herein. One or more examples of these embodiments are illustrated in the accompanying drawings. Those skilled in the art will understand that the systems and methods specifically described herein and illustrated in the accompanying drawings are non-limiting exemplary embodiments and that the scope of the present invention is defined not solely by the claims. The features illustrated or described in connection with one exemplary embodiment may be combined with the features of other embodiments. Such modifications and variations are intended to be included within the scope of the present invention. A number of problems with conventional methods and systems are noted herein and the methods and systems disclosed herein may address one or more of these problems. By describing these problems, no admission as to their knowledge in the art is intended. A person having ordinary skill in the art will appreciate that, although certain methods and systems are described herein with respect to waste management, the scope of the present invention is not so limited. Moreover, while this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

## Claims

1. A method for analysing and qualifying collected waste in a waste management chain, wherein said method comprises at least the following steps:
- ) defining at least one waste transfer event in the waste management chain where a waste flux is optically accessible;
- ) defining the measurement of at least one type of impurity in said waste flux;
- ) measuring said at least one type of impurity during said waste transfer event in the waste flux;
- ) attributing a quality index value to the collected waste depending on the result of the measurement step.

2. The method as defined in claim 1, wherein the transfer event is when the waste is discharged into a waste collection truck.

3. The method as defined in one of the preceding claims, wherein the transfer event is when waste is discharged from a waste collection truck and/or while filling up a dump container at a municipal waste collection center.

4. The method as defined in one of the preceding claims, wherein the measurement is an optical one.

5. The method as defined in the preceding claim, wherein the measurement is made by at least a camera on said truck and/or at a waste collection plant.

6. The method as defined in one of the preceding claims, wherein the measurement is made in the truck, when the waste is collected and/or when the waste is discharged from the truck and/or while filling up a dump container at a municipal waste collection center.

7. The method as defined in one of the preceding claims, wherein the contamination level for at least one impurity is monitored using at least one metric.

8. The method as defined in one of the preceding claims, wherein predictive forecast of the quality of separated waste collected is computed according to all data collected, such as images, quality index, localization.

9. The method as defined in the preceding claim, wherein the predictive forecast is used to compute a predictive route for waste collection, said route being optimised to reduce travel distance and time, or to group waste by purity range in separate collection trucks.

10. The method as defined in the preceding claim, wherein a predictive forecast of the effort and quality expected towards waste treatment is computed based on the quality data of incoming batches.

11. The method as defined in one of the preceding claims, wherein the identification and quantification of impurities are performed using anomaly detection or object detection or image segmentation algorithms or a combination of said algorithms.

12. A system to carry out the method as defined in one of the preceding claims, wherein said system comprises at least one mobile or fixed camera, data transmission means to transmit data and signals, a central unit with a computer device to collect and treat said data and send commands.

13. The system as defined in the preceding claim, wherein it comprises at least one light source to illuminate the field of view of the camera(s).

14. The system as defined in claims 12 or 13, wherein the camera is mounted on a waste collection truck with a field of view on an antechamber of said truck where waste is poured or said camera is facing the collection truck with field of view on the load when discharged out, or with a field of view on convertor belts or open containers or spaces for storage.

15. The system as defined in one of claims 12 to 14, wherein said system comprises at least an arm with a camera or multiple cameras, filed cameras, lasers and sensors in order to move the camera to get different perspectives, locally higher resolutions, and depth information to improve the detection, identification and qualification of impurities and sorted waste.
